# EUROPÄISCHE PATENTSCHRIFT

(11) **EP 0 484 737 B1**
(45) Veröffentlichungstag und Bekanntmachung des Hinweises auf die Patenterteilung: **02.01.1997**
(21) Anmeldenummer: 91118033.9
(22) Anmeldetag: 23.10.1991
(51) Int. Cl.: C08L 71/02, C08L 67/00

(54) **Thermoplastische Formmassen**
Thermoplastic moulding composition
Matières moulables thermoplastiques

(30) Priorität: 09.11.1990 DE 4035612; 09.11.1990 DE 4035611
(43) Veröffentlichungstag der Anmeldung: 13.05.1992
(73) Patentinhaber: BASF Aktiengesellschaft, 67063 Ludwigshafen (DE)
(72) Erfinder: McKee, Graham Edmund, Dr., W-6940 Weinheim (DE); Kielhorn, Sabine, Dr., W-6701 Maxdorf (DE); Bohnet, Siegbert, Dr., W-6800 Mannheim 1 (DE); Zeiner, Hartmut, Dr., W-6700 Ludwigshafen (DE)

(56) Entgegenhaltungen:
- EP-A- 0 446 737
- DE-A- 2 533 087
- DE-A- 4 007 766
- GB-B- 1 197 842
- US-A- 3 651 014

## Beschreibung

Die vorliegende Erfindung betrifft thermoplastische Formmassen auf der Basis von
A) 2 bis 97,5 Gew.-% Polyoxymethylenhomo- oder -copolymerisat
B) 2 bis 97,5 Gew.-% eines Polyesters
C) 0 bis 95,5 Gew.-% eines Polyamids
D) 0,5 bis 25 Gew.-% eines Polykondensationsprodukts aus 2,2-Di-(4-hydroxyphenyl)propan und Epichlorhydrin
E) 0 bis 60 Gew.-% eines schlagzäh modifizierenden Polymeren
F) 0 bis 70 Gew.-% eines Polycarbonats
und
G) 0 bis 60 Gew.-% faser- oder teilchenförmiger Füllstoffe oder deren Mischungen.

Darüber hinaus betrifft die Erfindung die Verwendung derartiger Formmassen zur Herstellung von Formkörpern jeglicher Art und die so erhaltenen Formkörper.

Polyoxymethylen-formmassen finden als thermoplastische Werkstoffe in vielen Anwendungen ihren Einsatz, insbesondere für Gehäuse und Maschinenbauteile sowie im Automobilsektor.

Bei allen diesen Anwendungen ist stets darauf zu achten, daß die Wärmestabilität des Polymeren ausreichend ist, denn nicht stabilisierte Polyoxymethylene zeigen bei thermischer Beanspruchung einen ausgeprägten Molekulargewichtsabbau, der entlang der Polymerkette solange fortschreitet, bis eine C-C-Bindung in der Kette auftritt.

Dies hat dazu geführt, bei der Polymerisation von Trioxan oder Formaldehyd Comonomere mitzuverwenden, durch deren Einbau C-C-Bindungen in der Kette entstehen. Dies kann den thermischen Abbau der Polyoxymethylene zwar reduzieren, aber eine weitere Verbesserung wäre wünschenswert.

In einer Reihe von Veröffentlichungen wird die Verwendung von Polyamiden als Wärmestabilisatoren für Polyoxymethylene beschrieben, gegebenenfalls unter Zusatz weiterer Stoffe. Nur beispielsweise sei hier auf die US-A 3 406 223, die FR-A 1 570 281 und die US-A 3 480 694 verwiesen. In der jap. Offenlegungsschrift 51/17972 werden mit aromatischen Polyamiden stabilisierte Polyoxymethylene beschrieben, die eine geringe Verfärbung bei der Verarbeitung erleiden und eine geringe Neigung zum Schäumen aufweisen. In der EP-A 47 529 werden stabilisierte Polyoxymethylen-Formmassen beschrieben, die zur Stabilisierung ein in einem Trägerharz dispergiertes Polyamid enthalten.

Alle derart stabilisierten Produkte zeigen zwar gegenüber dem Polyoxymethylen ohne Zusätze eine verbesserte Wärmestabilität, können jedoch noch nicht in vollem Umfang zufriedenstellen.

In der GB-A 1 197 842 werden wäßrige Emulsionen aus Polyamid und Polyoxymethylen beschrieben, die als Beschichtungsmittel oder Klebstoffe verwendet werden. Diese Produkte weisen jedoch bei der Verwendung als Werkstoffe ein nicht zufriedenstellendes Eigenschaftsprofil auf. Den gleichen Nachteil zeigen die in der JP 61069-859-A beschriebenen Formmassen, die aus Polyoxymethylen, Phenoxy und einem thermoplastischen Elastomeren des Typs Polyester oder Polyamid aufgebaut sind und die in der DE-A 38 02 753 beschriebenen Mischungen aus Polyoxymethylen, einem Polyester und einem schlagzäh modifizierenden Polymeren.

Aufgabe der vorliegenden Erfindung war es daher, thermoplastische Formmassen zur Verfügung zu stellen, die ein ausgewogenes Eigenschaftsspektrum, vor allem in Hinblick auf Wärmestabilität, Steifigkeit, Zähigkeit, Oberflächeneigenschaften wie Bedrucken, Kleben, Lackieren, Beschriften und Galvanisieren sowie Wasseraufnahme aufweisen.

Diese Aufgabe wird erfindungsgemäß gelöst durch die eingangs definierten thermoplastischen Formmassen gemäß Anspruch 1.

Als Komponente A) enthalten die erfindungsgemäßen Formmassen 2 bis 97,5, vorzugsweise 5 bis 97 Gew.-%, insbesondere 5 bis 93 Gew.-% eines Polyoxymethylenhomo- oder Copolymerisats.

Derartige Polymerisate sind dem Fachmann an sich bekannt und in der Literatur beschrieben.

Ganz allgemein weisen diese Polymere mindestens 50 mol-% an wiederkehrenden Einheiten -CH₂O- in der Polymerhauptkette auf.

Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung werden Polyoxymethylencopolymere als Komponente A bevorzugt, insbesondere solche, die neben den wiederkehrenden Einheiten -CH₂O- noch bis zu 50, vorzugsweise 0,1 bis 20 und insbesondere 0,3 bis 10 mol-% an wiederkehrenden Einheiten 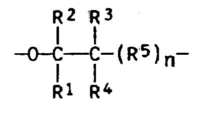 wobei R¹ bis R⁴ unabhängig voneinander ein Wasserstofatom, eine C₁- bis C₄-Alkylgruppe oder eine halogensubstituierte Alkylgruppe mit 1 bis 4 C-Atomen und R⁵ eine -CH₂-, -CH₂O-, eine C₁- bis C₄-Alkyl- oder C₁- bis C₄-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel 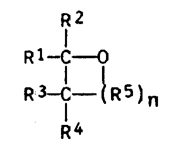 wobei R¹ bis R⁵ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie lineare Oligo- oder Polyformale wie Polydioxolan oder Polydioxepan als Comonomere genannt.

Als Komponente A) ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise einer bifunktionellen Verbindung der Formel 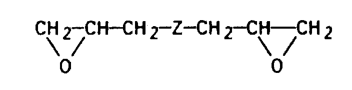 wobei Z eine chemische Bindung, -O-, -ORO- (R = C₁- bis C₈-Alkylen oder C₂- bis C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen Homo- und Copolymerisate sind dem Fachmann bekannt und in der Literatur beschrieben, so daß sich hier nähere Angaben erübrigen.

Die bevorzugten Polyoxymethylencopolymere haben Schmelzpunkte von mindestens 150°C und Molekulargewichte (Gewichtsmittelwert) Mw im Bereich von 5000 bis 200000, vorzugsweise von 7000 bis 150000.

Endgruppenstabilisierte Polyoxymethylenpolymerisate, die an den Kettenenden C-C-Bindungen aufweisen, werden besonders bevorzugt.

Als Komponente B) enthalten die erfindungsgemäßen Formmassen 2 bis 97,5 Gew.-%, vorzugsweise 5 bis 95 Gew.-%, insbesondere 5 bis 93 Gew.-% eines Polyesters.

Derartige Polyester B) sind an sich bekannt. Vorzugsweise werden Polyester verwendet, die einen aromatischen Ring in der Hauptkette enthalten. Der aromatische Ring kann auch substituiert sein, z. B. durch Halogene, wie Chlor und Brom und/oder durch C₁- bis C₄-Alkylgruppen, wie z. B. Methyl-, Ethyl-, i- bzw. n-Propyl- und i- bzw. n- bzw. t-Butylgruppen.

Die Herstellung der Polyester kann durch Reaktion von Dicarbonsäuren, deren Estern oder anderer esterbildender Derivate mit Dihydroxyverbindungen in an sich bekannter Weise erfolgen.

Als Dicarbonsäuren kommen beispielsweise aliphatische und aromatische Dicarbonsäuren in Frage, die auch als Mischung eingesetzt werden können. Nur beispielsweise seien hier Naphthalindicarbonsäuren, Terephthalsäure, Isophthalsäure, Adipinsäure, Azelainsäure, Sebacinsäure, Dodecandisäure und Cyclohexandicarbonsäuren, Mischungen dieser Carbonsäuren und esterbildende Derivate derselben genannt.

Als Dihydroxyverbindungen werden vorzugsweise Diole mit 2 bis 10 C-Atomen, besonders bevorzugt Ethylenglykol, 1,3-Propandiol, 1,4-Butandiol, 1,4-Butendiol und 1,6-Hexandiol verwendet; es können jedoch auch 1,4-Hexandiol, 1,4-Cyclohexandiol, 1,4-Di-(hydroxymethyl)cyclohexan, Bisphenol A, Neopentylglykol, Mischungen dieser Diole sowie esterbildende Derivate derselben eingesetzt werden.

Polyester aus Terephthalsäure oder Naphthalindicarbonsäuren und einer C₂-bis C₆-Diolkomponente, z.B. Polyethylenterephthalat, Polyethylennaphthalat, Polypropylenterephthalat oder Polybutylenterephthalat oder deren Mischungen werden besonders bevorzugt.

Selbstverständlich können auch Polyesterblockcopolymere wie Copolyetherester verwendet werden. Derartige Produkte sind an sich bekannt und in der Literatur, z. B. in der US-A 3 651 014, beschrieben. Auch im Handel sind entsprechende Produkte erhältlich, z. B. Hytrel® (Du Pont).

Die als Komponenten C) verwendbaren Polyamide sind an sich bekannt. Halbkristalline oder amorphe Harze mit einem Molekulargewicht von mindestens 5000, wie sie z.B. in der Encyclopedia of Polymer Science and Engineering, Vol. 11, S. 315 bis 489, John Wiley & Sons, Inc. 1988, beschrieben werden, können eingesetzt werden.

Beispiele hierfür sind Polyhexamethylenadipinsäureamid, Polyhexamethylenazelainsäureamid, Polyhexamethylensebacinsäureamid, Polyhexamethylendodekandisäureamid, Poly-11-aminoundekansäureamid und Bis-(p-aminocyclohexyl)-methandodekansäurediamid oder die durch Ringöffnung von Lactamen, z.B. Polycaprolactam oder Polylaurinlactam erhaltenen Produkte. Auch Polyamide auf der Basis von Terephthal- oder Isophthalsäure als Säurekomponente und/oder Trimethylhexamethylendiamin oder Bis-(p-aminocyclohexyl)-propan als Diaminkomponente sowie Polyamidgrundharze, die durch Copolymerisation zweier oder mehrerer der vorgenannten Polymeren oder deren Komponenten hergestellt worden sind, sind geeignet. Als Beispiel hierfür sei ein Copolykondensat aus Terephthalsäure, Isophthalsäure, Hexamethylendiamin und Caprolactam genannt.

Die Herstellung dieser Polyamide wird ebenfalls in der vorgenannten Schrift beschrieben. Das Verhältnis von endständigen Amingruppen zu endständigen Säuregruppen kann durch Variation des Molverhältnisses der Ausgangsverbindungen gesteuert werden.

Der Anteil des Polyamids in der erfindungsgemäßen Formmasse beträgt 0 bis 95,5 Gew.-%. Für den Fall, daß Polyamid in den erfindungsgemäßen Formmassen vorhanden ist, beträgt der Anteil 0,1 bis 95,5 Gew.-%, bevorzugt 0,5 bis 89 Gew.-%.

Als Komponente D) wird ein Polykondensationsprodukt aus 2,2-Di-(4-hydroxyphenyl)propan (Bisphenol A) und Epichlorhydrin in einer Menge von 0,5 bis 25 Gew.-%, bevorzugt von 1 bis 15 Gew.-% eingesetzt.

Sowohl die Polyamide als auch die Polyoxymethylene, die Polyester und die Kondensationsprodukte aus Epichlorhydrin und Bisphenol A sind kommerziell erhältlich. Verfahren zu deren Herstellung sind dem Fachmann ebenfalls bekannt. Handelsbezeichnungen der Polykondensate sind Phenoxy® (der Union Carbide Corporation) bzw. Epikote® (Fa. Shell). Das Molekulargewicht der Polykondensate kann in weiten Grenzen variieren; prinzipiell sind die im Handel erhältlichen Typen sämtlich geeignet.

Als Komponente E) enthalten die erfindungsgemäßen thermoplastischen Formmassen 0 bis 60, vorzugsweise 0 bis 50 Gew.-%, insbesondere 0 bis 40 Gew.-% eines schlagzäh modifizierenden Polymeren (im folgenden auch als kautschukelastisches Polymerisat oder Elastomer bezeichnet).

Bevorzugte Arten von solchen Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien-5-Ethyliden-norbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

R⁶C(COOR⁷)=C(COOR⁸)R⁹ (I)

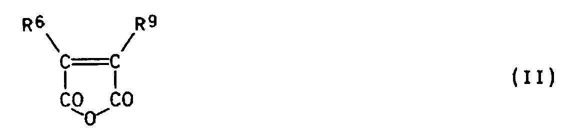

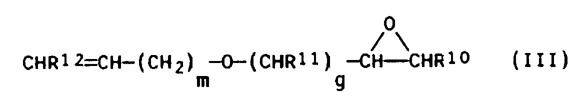

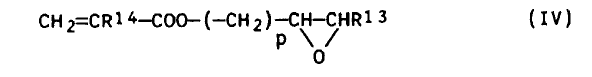

wobei R⁶ bis R¹⁴ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist. Vorzugsweise bedeuten die Reste R⁶ bis R¹² Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppen-enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säureanhydridgruppen enthaltenden Monomeren sowie der restlichen Menge an (Meth)acrylsäureestern.

Besonders bevorzugt sind Copolymerisate aus
- 50 bis 98,: insbesondere 55 bis 95 Gew.-% Ethylen,
- 0,1 bis 40,: insbesondere 0,3 bis 20 Gew.-% Glycidylacrylat und/oder Glycidylmethacrylat, (Meth)acrylsäure und/oder Maleinsäureanhydrid,
und
- 1 bis 45,: insbesondere 10 bis 40 Gew.-% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalystoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 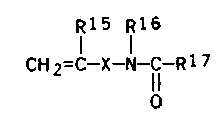 eingeführt werden können,
wobei die Substituenten folgende Bedeutung haben können:
- R¹⁵: Wasserstoff oder eine C₁- bis C₄-Alkylgruppe,
- R¹⁶: Wasserstoff, eine C₁- bis C₈-Alkylgruppe oder eine Arylgruppe, insbesondere Phenyl,
- R¹⁷: Wasserstoff, eine C₁- bis C₁₀-Alkyl-, eine C₆- bis C₁₂-Arylgruppe oder -OR¹⁸
- R¹⁸: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆-C₁₂-Arylengruppe oder 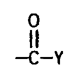
- Y: O-Z- oder NH-Z und
- Z: eine C₁- bis C₁₀-Alkylen- oder C₆- bis C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)ethylmethacrylat, (N,N-Dimethylamino)ethylacrylat, (N,N-Dimethylamino)methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannten pfropfvernetzende Monomere (graft-linking monomers) verwendet werden, d.h. Monomere mit zwei oder mehr polymerisierbaren Doppelbindungen, die bei der Polymerisation mit unterschiedlichen GeschwindigKeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an der Komponente E) bis zu 5 Gew.-%, vorzugsweise nicht mehr als 3 Gew.-%, bezogen auf E).

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacrylat, Buta-1,3-dien, Isopren, Ethylhexylacrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Anstelle von Pfropfpolymerisaten mit einem mehrschaligen Aufbau können 5 auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere E) können auch nach anderen üblichen Verfahren, z.B. durch Suspensionspolymerisation, hergestellt werden.

Weitere bevorzugte Kautschuke sind Polyurethane, wie in den EP-A 115 846, EP-A 115 847, EP-A 116 456, EP-A 117 664 und der EP-A 327 384 beschrieben. Kommerziell im Handel sind solche Produkte z.B. unter den Bezeichnungen Desmopan® (Bayer AG) oder Elastollan® (Elastogran Polyurethane GmbH) erhältlich.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Als Komponente F) können die erfindungsgemäßen Formmassen 0 bis 70 Gew.-% insbesondere 0 bis 40 Gew.-% eines Polycarbonats enthalten. Derartige Polycarbonate sind an sich bekannt und in der Literatur beschrieben.

Vorzugsweise können diese Polycarbonate durch Umsetzung von Kohlensäurederivaten wie Phosgen oder Diphenylcarbonat mit Diphenolen hergestellt werden. Grundsätzlich sind alle Diphenole verwendbar, wie sie z.B. in der Monographie vn H. Schnell, "Chemistry and Physics of Polycarbonates", Interscience Publishers, 1964 sowie der US-A-2 299 835 und der DE-A-22 48 817 genannt sind. Dihydroxydiphenyl, Di-(hydroxyphenyl)-alkane und Di-(hydroxyphenyl)ether oder deren Mischungen sind besonders bevorzugte Diphenole.

Ein besonders bevorzugtes Diphenol ist 2,2-Di-(4-hydroxyphenyl)propan (Bisphenol A). Dies kann auch in Mischung mit anderen Diphenolen wie 2,2-Di-(4-hydroxyphenyl)pentan, 2,6-Dihydroxydiphthalin, 4,4'-Dihydroxydiphenylsulfon, Di-(4-hydroxyphenyl)ether, Di-(4-hydroxyphenyl)sulfit, Di-(4-hydroxyphenyl)methan, 1,1-Di-(4-hydroxyphenyl)ethan oder 4,4-Dihydroxydiphenyl eingesetzt werden. Der Anteil an Bisphenol A in derartigen Mischungen liegt im allgemeinen im Bereich von 70 bis 98 Gew.-%.

Verfahren zur Herstellung derartiger Polycarbonate sind an sich bekannt und z.B. in den bereits erwähnten US-A-2 999 835 und DE-A-22 48 817 sowie den DE-A-13 00 266 und DE-A-14 95 730 beschrieben.

Als Komponente G) können die erfindungsgemäßen Formmassen 0 bis 60, vorzugsweise 0 bis 50 Gew.-% eines faser- oder teilchenförmigen Füllstoffs oder deren Mischungen enthalten.

Als verstärkend wirkende Füllstoffe seien beispielsweise Kaliumtitanat-Whisker, Kohlenstoff- und vorzugsweise Glasfasern genannt, wobei die Glasfasern z.B. in Form von Glasgeweben, -matten, -vliesen und/oder Glasseidenrovings oder geschnittener Glasseide aus alkaliarmem E-Glas mit einem Durchmesser von 5 bis 200 µm, vorzugsweise 8 bis 50 µm eingesetzt werden können, wobei die faserförmigen Füllstoffe nach ihrer Einarbeitung vorzugsweise eine mittlere Länge von 0,05 bis 1 mm, insbesondere 0,1 bis 0,5 mm aufweisen.

Andere geeignete Füllstoffe sind beispielsweise Wollastonit, Calciumcarbonat, Glaskugeln, Quarzmehl, Si- und Bornitrid oder Mischungen dieser Füllstoffe.

Neben den Komponenten A), B) und D) sowie ggf. C), E), F) und G) können die erfindungsgemäßen Formmassen noch übliche Zusatzstoffe und Verarbeitungshilfsmittel enthalten. Nur beispielhaft seien hier Zusätze zum Abfangen von Formaldehyd (Formaldehyd-Scavenger), Weichmacher, Schmiermittel, Antioxidantien, Haftvermittler, Füllstoffe, Lichtstabilisatoren und Pigmente genannt. Der Anteil solcher Zusätze liegt im allgemeinen im Bereich von 0,001 bis 5 Gew.-% (Stabilisatoren, Pigmente und Schmiermittel) bzw. 5 bis 40 Gew.-% (Füllstoffe).

Entsprechende Verbindungen sind dem Fachmann bekannt und beispielsweise in der EP-A 327 384 beschrieben.

Die Herstellung der erfindungsgemäßen thermoplastischen Formmassen erfolgt durch Mischen der Komponenten in an sich bekannter Weise, weshalb sich hier detaillierte Angaben erübrigen. Vorzugsweise werden die Komponenten A), B) und D) sowie ggf. C), E), F) und G) bei Temperaturen von 180 bis 280°C bevorzugt in einem Extruder gemischt, extrudiert und granuliert.

Ist in den erfindungsgemäßen thermoplastischen Formmassen kein Polyamid enthalten, so wird vorzugsweise der Polyester, ggf. mit dem Kautschuk und dem Kondensationsprodukt aus Bisphenol A und Epichlorhydrin aufgeschmolzen, dann mit dem Polyoxymethylen gemischt, extrudiert und granuliert. Der Kautschuk kann auch mit dem Polyoxymethylen aufgeschmolzen werden.

Die erfindungsgemäßen thermoplastischen Formmassen zeichnen sich durch ein ausgewogenes Eigenschaftsspektrum, insbesondere eine gute thermische Stabilität, Steifigkeit, Zähigkeit und Oberflächeneigenschaften sowie durch geringere Wasseraufnahme aus. Demzufolge eignen sie sich besonders zur Herstellung von Formkörpern jeglicher Art.

### Beispiele

Es wurden folgende Komponenten eingesetzt:
A Polyoxymethylen-Copolymerisat aus Trioxan und 2,5 bis 3 Gew.-% Butandiolformal, bezogen auf den Gesamtmonomergehalt (Ultraform® S 2320 der Ultraform GmbH) mit einem Schmelzindex von 13 g/10 min (190°C/2,16 kg)
B Polybutylenterephthalat mit einer Viskositätszahl von 130 ml/g, gemessen an einer 0,5 gew.-%igen Lösung in Phenol und o-Dichlorbenzol (Gew.-Verhältnis 1:1) bei 25°C (Ultradur® B 4500 der BASF AG)
C Poly-ε-caprolactam mit einem mittleren Molekulargewicht (Zahlenmittelwert) von 14000 (Ultramid® BS 400 S der BASF AG)
D Kondensationsprodukt aus Bisphenol A und Epichlorhydrin (Phenoxy® PKHH der UCC)
E/1 Eine Kautschukdispersion aus mit Styrol und Acrylnitril gepfropftem Polybutadien, mit einem Feststoffgehalt von 40 Gew.-%, hergestellt nach dem in der DE-A 34 46 225 beschriebenen Verfahren, in dem eine Polybutadiendispersion mit einem Feststoffgehalt von 40 Gew.-% und einem d₅₀-Wert der Massenverteilung von 0,1 µm mit einer Methacrylamid/Ethylacrylat-Copolymerdispersion (Gew.-Verhältnis Methacrylamid : Ethylacrylat = 4 : 96) versetzt wurde, wodurch die Polybutadienteilchen agglomerierten (d₅₀-Wert der Massenverteilung betrug 0,3 µm). Anschliepend wurde mit einem Gemisch aus Styrol und Acrylnitril (Gew.-Verhältnis Styrol : Acrylnitril = 75 : 25) gepfropft, wobei die Pfropfhülle aus Styrol/Acrylnitril 20 Gew.-% des Pfropfkautschuks betrug.
E/2 Kautschukelastisches Polymerisat aus 286,68 g n-Butylacrylat, 5,85 g Dihydrodicyclopentadienylacrylat, 89,56 g Styrol und 38,38 g Acrylnitril, hergestellt durch Emulsionspolymerisation in Wasser nach dem in der DE-A 24 44 584 beschriebenen Verfahren.

### Beispiele 1 bis 11

Auf einem Zweischneckenextruder (ZSK 53 von Werner & Pfleiderer) wurde der Polyester (Komponente B) bei 260°C aufgeschmolzen und mit den Kautschukdispersionen (Komponenten E) vermischt, das Wasser über Entgasungsschnecken entfernt, der Strang ausgetragen, gekühlt und granuliert. In einem zweiten Extruderschritt wurde das Polyoxymethylen (Komponente A) in einem Zweischneckenextruder (ZSK 30 von Werner & Pfleiderer) bei 220°C aufgeschmolzen. Über einen Seitenextruder (ebenfalls ZSK 30 von Werner & Pfleiderer) wurde bei 250°C die Polyester-Kautschuk-Mischung, gegebenenfalls das Polyamid (Komponente C) und Phenoxy® (Komponente D) aufgeschmolzen und die Schmelze in den Hauptextruder eingeleitet. Nach dem Mischen aller Komponenten bei einer Temperatur von 220°C wurde als Strang ausgetragen, gekühlt und granuliert.

### Vergleichsbeispiele V1 bis V3

Es wurde wie in den Beispielen 1 bis 11 gearbeitet, jedoch ohne Zugabe von Phenoxy® (Komponente D).

Die Zusammensetzungen und Eigenschaften der Abmischungen sind in der Tabelle zusammengestellt.

Der Elastizitätsmodul (E-Modul) wurde nach DIN 53457 bestimmt, die Reißdehnung (ε_{R}) nach DIN 53455 bei 23°C. Die Gesamtarbeit (W_{ges}) beim Durchstoßversuch wurde nach DIN 53443 ermittelt. Die Bestimmung der 50%-Schädigungsarbeit (W₅₀) wurde an 2 mm dicken Rundscheiben mit einem Durchmesser von 60 mm und einem Fallbolzendurchmesser von 20 mm nach DIN 53443 durchgeführt. Die Kerbschlagzähigkeit (aₖ) wurde nach DIN 53453 bei 23°C und die Lochkerbschlagzähigkeit (aₖₗ) beim Schlagbiegeversuch nach DIN 53753 bei 23°C bestimmt. Die Bestimmung der IZOD-Kerbschlagzähigkeit erfolgte nach ISO 180/4A mit eingespritzter Kerbe bei 23°C. Zur Prüfung der thermischen Stabilität der Abmischungen wurden die Gewichtsverluste nach 2 stündiger Lagerung in Luft oder in Stickstoff-Atmosphäre bei jeweils 222°C bestimmt.

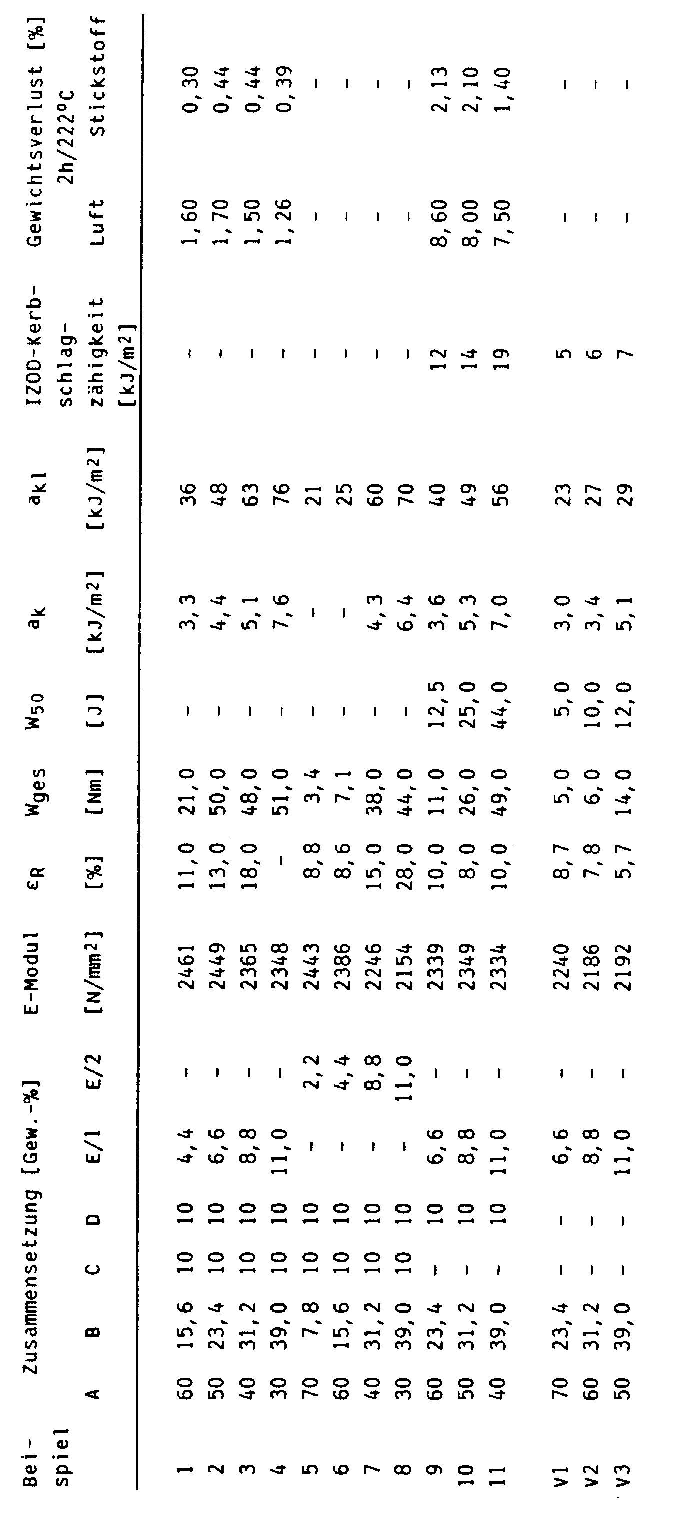

## Patentansprüche

1. Thermoplastische Formmassen auf der Basis von
A) 2 bis 97,5 Gew.-% Polyoxymethylenhomo- oder -copolymerisat
B) 2 bis 97,5 Gew.-% eines Polyesters
C) 0 bis 95,5 Gew.-% eines Polyamids
D) 0,5 bis 25 Gew.-% eines Polykondensationsprodukts aus 2,2-Di-(4-hydroxyphenyl)propan und Epichlorhydrin
E) 0 bis 60 Gew.-% eines schlagzäh modifizierenden Polymeren
F) 0 bis 70 Gew.-% eines Polycarbonats
und
G) 0 bis 60 Gew.-% faser- oder teilchenförmiger Füllstoffe oder deren Mischungen.

2. Verwendung der thermoplastischen Formmassen gemäß Anspruch 1 zur Herstellung von Fasern, Folien und Formkörpern.

3. Formkörper, erhältlich aus thermoplastischen Formmassen gemäß Anspruch 1.

## Claims

1. A thermoplastic molding material based on
A) from 2 to 97.5% by weight of polyoxymethylene homo- or copolymer,
B) from 2 to 97.5% by weight of a polyester,
C) from 0 to 95.5% by weight of a polyamide,
D) from 0.5 to 25% by weight of a polycondensate of 2,2-di-(4-hydroxyphenyl)propane and epichlorohydrin,
E) from 0 to 60% by weight of a polymeric impact modifier,
F) from 0 to 70% by weight of a polycarbonate
and
G) from 0 to 60% by weight of fibrous or particulate fillers or mixtures thereof.

2. Use of a thermoplastic molding material as claimed in claim 1 for the production of fibers, films and moldings.

3. A molding obtainable from a thermoplastic molding material as claimed in claim 1.

## Revendications

1. Matières moulables thermoplastiques à base de
A) de 2 à 97,5% en poids d'homo- ou de copolymère de polyoxyméthylène
B) de 2 à 97,5% en poids d'un polyester,
C) de 0 à 95,5% en poids d'un polyamide,
D) de 0,5 à 25% en poids d'un produit de polycondensation du 2,2-di-(4-hydroxyphényl)-propane et d'épichlorhydrine,
E) de 0 à 60% en poids d'un polymère modifié à résistance élevée aux chocs,
F) de 0 à 70% en poids d'un polycarbonate,
et
G) de 0 à 60% en poids de matières de remplissage de forme fibreuse ou particulaire, ou encore de leurs mélanges.

2. Utilisation des matières moulables thermoplastiques selon la revendication 1 pour la fabrication de fibres, de feuilles et de corps moulés.

3. Corps moulés que l'on obtient à partir des matières moulables thermoplastiques selon la revendication 1.
